# FASCICULE DE BREVET EUROPEEN

(11) **EP 1 141 969 B1**
(45) Date de publication et mention de la délivrance du brevet: **14.12.2005**
(21) Numéro de dépôt: 99961174.2
(22) Date de dépôt: 27.12.1999
(51) Int. Cl.: G21C 7/10, G21C 7/24

(54) **CRAYON ABSORBANT POUR GRAPPE DE COMMANDE DE REACTEUR NUCLEAIRE**
ABSORBERSTAB ZUM EINSATZ IN EINEM KERNREAKTORSTEUERSTABBÜNDEL
ABSORBENT PENCIL FOR NUCLEAR REACTOR CONTROL CLUSTER

(30) Priorité: 30.12.1998 FR 9816645
(43) Date de publication de la demande: 10.10.2001
(73) Titulaire: Framatome ANP, 92400 Courbevoie (FR); SOCIETE FRANCO-BELGE DE FABRICATION DE COMBUSTIBLES, 92084 Paris La Défense Cédex (FR)
(72) Inventeur: THIBIEROZ, Nathalie, F-69300 Caluire (FR); HERTZ, Dominique, F-69110 Sainte-Foy-lès-Lyon (FR); DELANNOY, Thierry, F-01120 La Boisse (FR); DUTHOO, Dominique, F-26100 Romans-sur-Isère (FR)
(74) Mandataire: Jacobson, Claude
(86) Numéro de dépôt international: PCT/FR1999/003292
(87) Numéro de publication internationale: WO 2000/041183

(56) Documents cités:
- WO-A-97/48104
- DE-A- 3 624 318
- FR-A- 2 429 476
- FR-E- 91 259
- US-A- 3 087 879
- US-A- 4 853 176
- PATENT ABSTRACTS OF JAPAN vol. 016, no. 020 (C-0902), 20 janvier 1992 (1992-01-20) & JP 03 236453 A (SUMITOMO METAL IND LTD), 22 octobre 1991 (1991-10-22)
- PATENT ABSTRACTS OF JAPAN vol. 096, no. 005, 31 mai 1996 (1996-05-31) & JP 08 005501 A (NUCLEAR FUEL IND LTD), 12 janvier 1996 (1996-01-12)
- PATENT ABSTRACTS OF JAPAN vol. 098, no. 002, 30 janvier 1998 (1998-01-30) & JP 09 257979 A (NUCLEAR FUEL IND LTD), 3 octobre 1997 (1997-10-03)
- PATENT ABSTRACTS OF JAPAN vol. 015, no. 116 (P-1182), 20 mars 1991 (1991-03-20) & JP 03 006493 A (TOSHIBA CORP), 11 janvier 1991 (1991-01-11)

## Description

La présente invention concerne les crayons absorbants destinés à être intégrés à des grappes de commande pour réacteur nucléaire. Elle est notamment utilisable dans les réacteurs modérés et refroidis par de l'eau sous pression, dont le coeur est constitué par des assemblages de combustible ayant chacun un faisceau de crayons de combustible retenus aux noeuds d'un réseau régulier par un squelette formé d'embouts reliés par des tubes-guides portant des grilles de maintien des crayons. Dans ce cas, chaque grappe est constituée par une araignée liée à un mécanisme de commande et portant des crayons contenant du matériau absorbant, destinés à être insérés plus ou moins profondément dans les tubes guides ou même extraits totalement du coeur.

Habituellement, le réglage de puissance et l'arrêt du réacteur mettent en oeuvre plusieurs groupes de grappes de constitutions différentes (telles que des grappes dites "noires", très absorbantes, et des grappes "grises" moins absorbantes).

Les -grappes "noires" sont constituées de crayons contenant un matériau fortement absorbant, tel qu'un alliage Ag-In-Cd, dit AIC, ou le carbure de bore B₄ C, dans une gaine, généralement en acier inoxydable.

Ces crayons présentent des limitations, notamment lorsqu'ils sont destinés à des réacteurs mis en oeuvre en "suivi de charge" et/ou à une utilisation très longue. L'alliage Ag In Cd est sujet au fluage et au gonflement sous irradiation. Le carbure B₄C présente un gonflement important sous irradiation qui écarte son utilisation dans la partie basse des crayons qui est la plus fréquemment insérée dans le coeur.

On sait par ailleurs que le hafnium est un absorbant neutronique qui ne flue pas aux températures de travail et qui ne gonfle pas sous irradiation. Mais il exige d'être protégé de l'hydruration s'il est dans une gaine en acier ou de l'usure s'il est amené à frotter contre les éléments de guidage. Son soudage thermique à l'acier inoxydable utilisé pour constituer les gaines de protection des crayons à pastilles de carbure de bore conduit à provoquer des liaisons fragiles et sensibles à l'hydruration, comme on le verra plus loin.

Le remplacement de Ag In Cd par le hafnium dans une gaine en acier permet en principe d'éviter le gonflement de l'absorbant. Mais il faut éviter l'hydruration de l'hafnium.

Les tentatives de constituer des crayons avec hafnium sous gaine se sont heurtées à des difficultés. Après usure de la pellicule d'oxyde naturel qui se forme au contact de l'air lors de la fabrication par suite du frottement, le hafnium absorbe de l'hydrogène qui a traversé la gaine en acier et gonfle, à un point tel qu'il peut devenir nécessaire de changer prématurément les grappes.

Un problème similaire se pose pour les crayons des grappes "grises" contenant des crayons moins absorbants.

On a déjà proposé (brevet EP-845 146) décarter la difficulté en utilisant des crayons dont la partie inférieure est constituée par un barreau en hafnium non gainé ou en HfZr et en remplaçant, en partie supérieure du crayon, la gaine en acier inoxydable par une gaine en alliage HfZr contenant des pastilles de (HfZr) B₂ ou HfZr.

Afin d'éviter d'adopter un matériau de gainage ayant des caractéristiques mécaniques très inférieures à celles de l'acier inoxydable, l'invention vise notamment à fournir un crayon absorbant capable de supporter une irradiation de longue durée en réacteur et permettant de conserver une gaine et un bouchon supérieur de raccordement à une araignée en acier inoxydable.

Dans ce but, l'invention propose notamment un crayon absorbant, utilisable notamment dans une grappe de commande, comportant une gaine en acier inoxydable fermée par des bouchons et contenant un empilement de pastilles absorbantes, caractérisé en ce qu'il comprend de plus un barreau terminal d'hafnium avantageusement non gainé, fixé au bouchon inférieur de la gaine par une liaison purement mécanique. L'empilement de pastilles est constitué de carbure de bore dans le cas le plus courant ; il peut être aussi constitué de borure de hafnium et de zirconium, purs ou en mélange (comme décrit dans la demande de brevet FR 96 07430) ou encore d'oxydes de terres rares (Europium, dysprosium), purs ou en mélange avec d'autres oxydes.

Le barreau, plein ou creux, représente en général au moins 15 % de la longueur du crayon, c'est-à-dire de la distance sur laquelle le crayon peut être déplacé par son mécanisme. Fréquemment, le barreau représente environ 25 % de la longueur totale du crayon. C'est le barreau qui sera le plus fréquemment inséré dans le coeur.

Le barreau en hafnium non gainé, en contact direct avec l'eau sous pression, ne s'hydrure pas, ne gonfle pas et ne flue pas. Par contre, il convient de protéger le hafnium pour cette utilisation lorsqu'il est sous forme non gainée :
- contre l'usure, pour la partie en contact avec ses partenaires,
- contre l'hydruration au niveau de la liaison entre le hafnium et l'acier inoxydable.

La meilleure protection est une couche d'oxyde, établie sur une couche de diffusion sous-jacente imperméable à l'hydrogène et résistant à l'usure. Cette couche se forme naturellement dans le milieu rencontré dans les réacteurs à eau sous pression (pression d'environ 150 bars et température comprise entre 280 et 350°C) mais avec une épaisseur généralement insuffisante pour protéger efficacement de l'usure. Cette couche peut également être créée, avant montage du crayon dans le réacteur, par un traitement de surface tel que celui décrit par exemple dans le document EP-A-0 421 868. Dans certains cas, l'épaisseur risque encore d'être trop faible pour résister aux sollicitations en usure les plus fortes.

Une couche de protection initiale contre l'usure peut également être créée par oxydation ménagée de la surface extérieure en atmosphère d'oxygène pur ou d'oxygène-argon, à une température comprise entre 800°C et 950°C. La couche a avantageusement au moins 5 µm d'épaisseur initiale (comme décrit dans la demande de brevet FR 96 07430).

Des essais de frottement menés en eau pressurisée ont montré qu'il est souhaitable de disposer d'une épaisseur d'oxyde d'au moins 5 à 10 µm pour résister à l'usure. En revanche, si l'épaisseur d'oxyde formée par oxydation thermique est trop importante, les contraintes à l'interface métal/oxyde sont élevées et peuvent conduire à la desquamation de la couche d'oxyde. Toutefois même en cas de desquamation de l'oxyde, la résistance à l'usure reste assurée par la couche de diffusion sous-jacente pourvu qu'elle ait une épaisseur suffisante (de l'ordre de 12 à 15 µm).

Le procédé d'oxydation établit avantageusement une couche d'oxyde assez épaisse pour empêcher l'hydruration (en particulier dans les zones de laision avec l'acier inoxydable austénitique) et forme une couche diffusée assez épaisse pour supporter les sollicitations liées à l'usure.

Une couche d'oxydation trop épaisse, dépassant 10 µm, risque de desquamer. Un bon compromis peut être atteint en visant une couche d'oxyde de 5 à 10 µm et une couche de diffusion de 15 à 50 µm, notamment 25 à 30 µm, de profondeur. Il est généralement inutile de viser une couche diffusée plus épaisse compte tenu des sollicitations en usure rencontrées par les crayons absorbants des réacteurs nucléaires à eau pressurisée.

Ce compromis peut être atteint en limitant la température de traitement pour laisser le temps à la diffusion de s'opérer et donc aux contraintes internes de diminuer, ainsi qu'en limitant la vitesse d'apport d'oxygène soit en limitant la pression partielle lors de l'oxydation en jouant sur la pression totale et la dilution, soit en intercalant, entre les phases d'oxydation, des phases de diffusion. La vitesse de circulation du gaz oxydant est aussi un paramètre de ce processus.

C'est ainsi que, pour atteindre une valeur surfacique de la quantité d'oxygène introduit de 0.0001 à 0.01 1/cm² de substrat, une oxydation ménagée à 860±10°C durant 6 heures sous une pression totale de 0.1 à 0.7 mbar dans une atmosphère d'argon contenant 3 à 25 % d'oxygène permet d'obtenir, sur de l'hafnium contenant 300 ppm de fer et 300 ppm d'oxygène, une épaisseur d'oxyde de 6±1 µm d'épaisseur et une couche diffusée de 35 à 50 µm de profondeur.

On peut obtenir un résultat semblable par une oxydation thermique de 6 heures à 920±10°C dans une atmosphère d'argon à 3 % d'oxygène en jouant sur la durée des phases d'oxydation et de diffusion, par exemple en réitérant 6 fois le cycle suivant :
- oxydation durant 1 minute,
- diffusion sous argon pur durant 1 heure.

De façon plus générale, on peut réaliser une couche protectrice par oxydation ménagée du hafnium durant 3 à 12 heures entre 820°C et 950°C par de l'oxygène dilué à une teneur entre 1 et 50 %, sous pression réduite (quelques fractions de mbar) ; on peut également utiliser un traitement d'oxydation-diffusion dont la durée d'oxydation est comprise entre 0,1 % et 10% du temps total de traitemnt.

Comme l'acier inoxydable est perméable à l'hydrogène atomique, il est nécessaire de préserver la couche d'oxyde imperméable à l'hydrogène au niveau de la liaison entre le bouchon inférieur de la gaine et le barreau et/ou de permettre le renouvellement de cette couche d'oxyde au contact de l'eau. La plupart des procédés de jonction classiques ne permettent pas de respecter cette condition et/ou conduisent à une liaison hafnium-acier fragile et incompatible avec les sollicitations alternées que l'on rencontre lors du fonctionnement d'un réacteur.

Par exemple, le soudage thermique direct du hafnium à l'acier donne naissance à des phases intermétalliques qui rendent la liaison fragile et de plus il crée une continuité de la matière au travers de laquelle l'hydrogène pourrait migrer de l'acier inoxydable vers le hafnium. Le soudage à l'état solide, par exemple par diffusion ou par friction, conduit à des liaisons ayant une fragilité trop élevée et conduit encore à une continuité de la matière provoquant une hydruration.

Les liaisons purement mécaniques permettent d'écarter les inconvénients ci-dessus. Parmi les procédés utilisables, on peut notamment utiliser :
- l'assemblage par compression isostatique à froid, qui permet d'obtenir des liaisons serties ayant des caractéristiques mécaniques élevées, sans création de continuité de matière,
- l'assemblage par vissage du barreau dans le bouchon, avec arrêt en rotation de la liaison filetée par déformation.

On peut- également envisager l'assemblage par magnétostriction ou par explosion, qui fournit une liaison sertie extrêmement robuste. Toutefois, cette solution présente l'inconvénient de nécessiter la présence d'un propulseur en alliage d'aluminium, étant donné la conductibilité électrique insuffisante de l'acier inoxydable et du hafnium. Ce propulseur reste lié à la pièce et son enlèvement mécanique ou par attaque à la soude risque d'endommager la liaison.

On peut aussi envisager l'assemblage par emboîtement des deux composants à relier, contre-perçage et goupillage. Toutefois, cette solution présente une résistance mécanique inférieure à celle de la liaison vissée freinée.

L'invention propose également un procédé d'assemblage par compression isostatique à froid qui est utilisable non seulement pour réaliser un crayon absorbant, mais également chaque fois que l'on souhaite relier une pièce en hafnium ou en un matériau présentant des caractéristiques similaires (tels que le zirconium et le titane) à une pièce en acier inoxydable, en alliage de nickel, ou un autre alliage non soudable aux matériaux de la classe du hafnium, une des deux pièces étant mise, dans la partie à assembler, sous forme d'un tube dans lequel s'engage l'autre pièce, de forme cylindrique massive.

L'invention sera mieux comprise à la lecture de la description qui suit de modes particuliers-de réalisation, donnés à titre d'exemples non limitatifs. La description se réfère aux dessins, dans lesquels :
- La figure 1 est une vue en élévation et en coupe d'un crayon conforme à un premier mode de réalisation de l'invention, ayant une liaison sertie entre le barreau de hafnium et le bouchon terminal de la gaine ;
- la figure 2 est une vue à grande échelle de la région de la liaison sertie, indiquée par un cadre en tirets sur la figure 1 ;
- la figure 3 est une vue en élévation et en coupe. partielle d'un dispositif permettant de réaliser la liaison sertie montrée en figure 2 ;
- la figure 4 est une vue à grande échelle d'un détail de la figure 3, montrant les composants qui interviennent dans le sertissage ;
- la figure 5, similaire à la figure 1, montre un crayon ayant une liaison filetée et bloquée ;
- la figure 6, similaire à la figure 2, est une vue à grande échelle de la zone d'assemblage ;
- la figure 7 est une coupe suivant la ligne VII-VII de la figure 6; et
- la figure 8 est une vue en coupe d'une variante.

Le crayon 10 montré en fïgure 1 comporte une gaine 12 fermée par des bouchons de liaison 14 et supérieur 16 et contenant une colonne de matériau absorbant retenue en appui contre le bouchon inférieur de liaison 14 par un ressort 20 comprimé entre la colonne et le bouchon supérieur 16. Le bouchon supérieur 16 permet de fixer lé crayon à un doigt d'une araignée 22. Ce bouchon supérieur 16 et les moyens permettant de le fixer à l'araignée 22 peuvent avoir notamment la constitution décrite dans la demande de brevet EP-782 150, à laquelle on pourra se reporter.

Le crayon présente une forme classique, de diamètre constant sauf dans la partie basse en forme d'ogive facilitant l'insertion des crayons dans le tube guide d'un assemblage lors de la descente d'une grappe absorbante. La gaine 12, le bouchon de liaison 14 et le bouchon supérieur 16 sont avantageusement constitués en acier inoxydable austénitique de nuance telle qu'ils puissent être soudés électriquement avec une électrode tungstène (soudage TIG). La surface extérieure de la gaine, du bouchon supérieur et du bouchon de liaison, est avantageusement soumise avant assemblage à un traitement de nitruration qui augmente la résistance à l'usure. Un acier austénitique permet un traitement de nitruration ionique de bonne qualité avec une faible sensibilité à la corrosion. La nitruration peut être effectuée par le procédé décrit dans le document FR-A-2 604 188 auquel on pourra se reporter.

Les pastilles 24 occupant la gaine sont en général constituées par du carbure de bore. Elles ont un diamètre légèrement inférieur au diamètre interne de la gaine 12, afin de permettre leur insertion et de tolérer un gonflement. La gaine elle même peut avoir un diamètre extérieur de 9,68 mm et une épaisseur de 1 mm environ, courante dans les réacteurs à eau sous pression. Le ressort 20 peut être, de façon classique, en un alliage de type "Inconel".

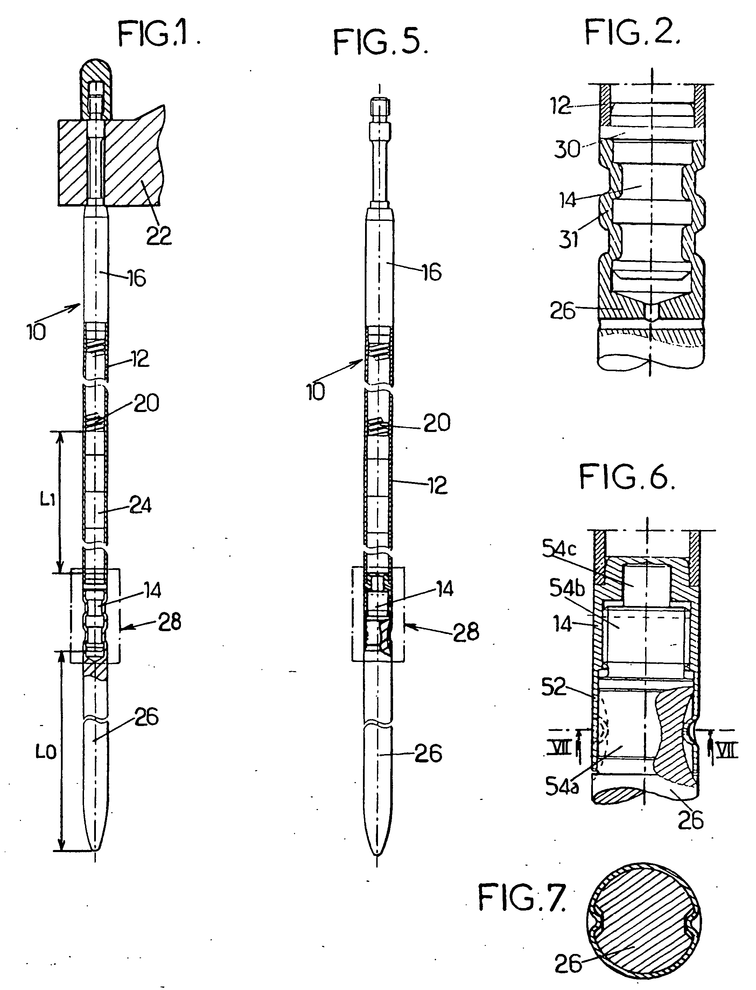

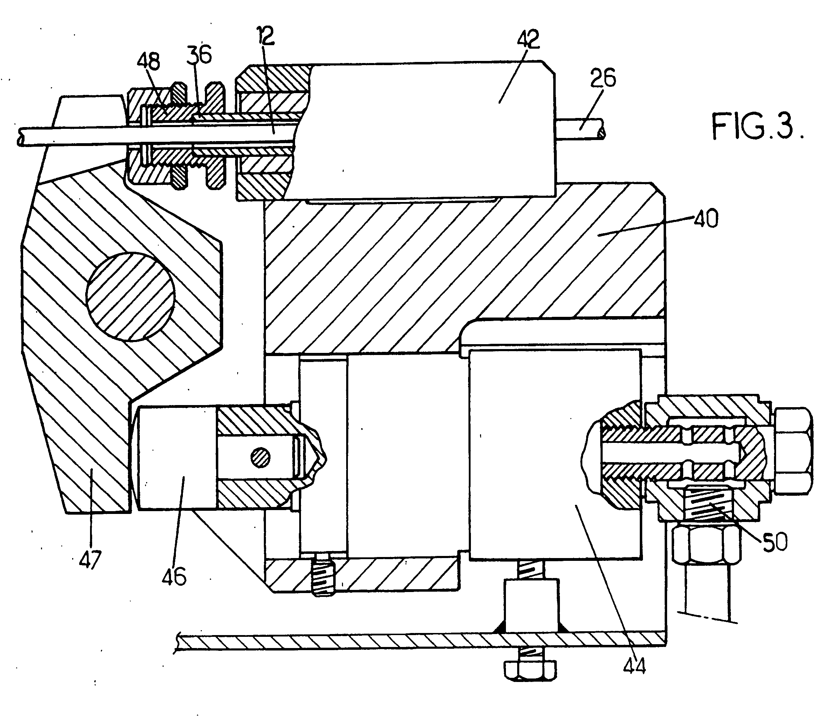

Le bouchon de liaison 14 est fixé à un barreau 26 en hafnium, massif dans le cas représenté sur la figure 1. La longueur totale L0 du barreau 26 sera généralement comprise entre 25 et 35 % de la longueur L1 de la colonne de pastilles 24.

Le barreau de hafnium 26 est fixé au bouchon de liaison 14 par une liaison purement mécanique.

Dans le cas illustré sur les figures 1 et 2, cette liaison est effectuée par sertissage dans la zone indiquée par le cadre 28. Pour cela, le bouchon de liaison 14 présente une partie supérieure engagée dans la gaine et une collerette 30 appuyée sur la tranche inférieure de la gaine et soudée à la gaine. Il a un prolongement dans lequel sont usinées des rainures ou gorges circonférentielles, au nombre de deux sur la figure 2. Le barreau 26 se termine de son côté par une zone tubulaire mince 31 constituant une jupe, déformée dans les rainures du bouchon de liaison 14 une fois l'assemblage réalisé. On voit que la colonne absorbante ne présente ainsi qu'une très faible discontinuité, grâce à la présence de la jupe.

En fond de jupe est ménagé un perçage axial débouchant sur un trou servant à la suspension des barreaux au cours du traitement d'oxydation ; il permet la circulation de l'eau à l'intérieur de la liaison et une régénération constante de la couche d'oxyde.

Le sertissage est avantageusement réalisé par compression isostatique à froid, par exemple à laide d'un dispositif du genre montré en figures 3 et 4.

Ce procédé et ce dispositif peuvent être utilisés pour assembler des parties en deux matériaux différents et ne permettant pas le soudage thermique classique, autres que le hafnium et l'acier inoxydable.

Les composants à sertir (barreau de hafnium et gaine munies de bouchons dans le cas illustré en figure 2) sont placés de façon que la zone à sertir se trouve au droit d'une d'une bague 32 en matériau déformable, mais incompressible ou très peu compressible, tels que certains élastomères. Au repos, le diamètre intérieur de cette bague 32 est légèrement supérieur au diamètre extérieur de la gaine à déformer. La longueur de la bague 32 est adaptée à celle du sertissage à effectuer. Dans le cas du sertissage d'une gaine sur un barreau d'hafnium du genre montré en figure 1, la longueur de la bague ira de quelques millimètres à une quinzaine de millimètres. Son diamètre extérieur est d'environ 10 mm supérieur à son diamètre intérieur.

C'est la déformation radiale de cette bague sous l'effet d'une compression axiale qui assurera le sertissage.

On voit sur la figure 4 que la bague 32 est enfermée dans une chambre délimitée par un manchon 34 en acier à haute résistance et un piston annulaire 36 qui coulisse dans un alésage du manchon. Ce manchon est percé d'un trou d'insertion du barreau 26. Le diamètre intérieur du piston est prévu pour livrer passage à la gaine 12.

Le dispositif comprend un mécanisme permettant d'enfoncer le piston 36 dans le manchon. Ce mécanisme est porté par un châssis 40 auquel est fixé un boîtier 42 de réception du manchon. Ce châssis porté un vérin hydraulique 44 dont le plongeur 46 est en appui sur un bras basculant 47. Ce bras basculant 47 s'appuie sur le piston 36 par l'intermédiaire d'un module de réglage constitué de deux rondelles 48 vissées l'une dans l'autre. Ces rondelles sont percées d'un trou central et le bras 48 présente une fente, afin de laisser un libre passage aux composants à sertir.

Lorsque le vérin est alimenté par une tubulure 50, il comprime la bague 32 qui se gonfle vers l'intérieur et déforme la zone tubulaire 31 du barreau pour l'amener de la forme montrée en figure 4 à la forme montrée en figure 2.

Le dispositif qui vient d'être décrit est susceptible de nombreuses variantes. Le sertissage peut s'effectuer sur une seule gorge, ce qui permet de réduire la longueur de la bague 32. Deux bagues séparées par une entretoise (ou davantage) peuvent être prévues pour agir chacune au droit d'une gorge. Le sertissage peut s'effectuer par l'intérieur, la bague 32 étant alors placée à l'intérieur des deux parties tubulaires à assembler pour provoquer une expansion.

La liaison mécanique peut également être réalisée par vissage, comme indiqué sur les figures 5 à 7 où les organes correspondant à ceux des figures 1 et 2 sont désignés par les mêmes numéros de référence. Dans ce cas, le bouchon de liaison 14 présente successivement une partie qui s'emboîte dans la partie terminale de la gaine et qui se termine par un épaulement d'appui, une partie taraudée et une jupe mince déformable 52. Ce bouchon de liaison 14 est soudé à la gaine. Le barreau 26 se termine par trois zones de diamètre décroissant. La première zone 54a présente des encoches longitudinales, au nombre de deux dans le cas illustré, destinées à recevoir des zones déformées de la jupe en regard pour immobiliser en rotation le barreau. Elle présente également des zones de centrage de façon à faciliter l'assemblage. La seconde zone 54b est filetée et permet le montage du barreau sur le bouchon de liaison. Elle est destinée à être vissée dans la partie taraudée du bouchon et serrée à un couple déterminé. Le filetage est dimensionné de façon à offrir une résistance mécanique suffisante aux sollicitations en fatigue subies en réacteur. Enfin, la troisième zone 54c est constituée par un prolongement s'engageant dans le bouchon, afin d'assurer la continuité axiale de l'absorbant neutronique. Le blocage en rotation, après fixation du barreau, est effectué par déformation de la jupe 52 à l'aide d'un poinçon de forme adaptée pour l'enfoncer dans les encoches.

L'eau peut pénétrer à l'intérieur de cette liaison et régénérer constamment la couche d'oxyde protectrice du hafnium.

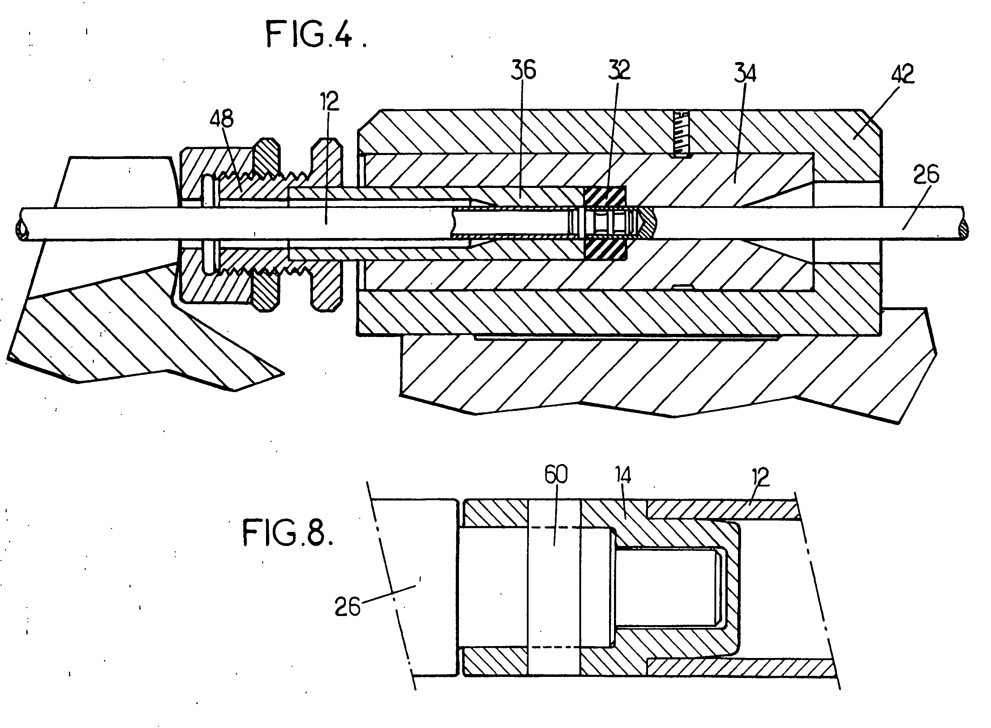

Enfin, la liaison mécanique montrée en figure 8, où les organes correspondant à ceux de la figure 6 sont désignés par les mêmes références, comporte un bouchon de liaison 14 présentant un chambrage de réception d'une partie terminale, de diamètre réduit, du barreau 26. Une clavette 60 est emmanchée dans des perçages transversaux alignés du bouchon de liaison 14 et de la partie terminale du barreau.

## Revendications

1. Crayon (10) absorbant comportant une gaine (12) en acier inoxydable fermée par des bouchons (14, 16) également en acier inoxydable et contenant une colonne de pastilles d'absorbant (24) tel que du carbure de bore, **caractérisé en ce qu'**il comporte également un barreau terminal (26) de hafnium fixé au bouchon inférieur (14) par une liaison purement mécanique.

2. Crayon selon la revendication 1, **caractérisé en ce que** la liaison mécanique est une liaison vissée et freinée.

3. Crayon selon la revendication 1, **caractérisé en ce que** la liaison mécanique est une liaison sertie par compression isostatique à froid.

4. Crayon selon la revendication 3, **caractérisé en ce que** le bouchon inférieur (14) présente une partie supérieure engagée dans la gaine et une collerette (30) d'appui sur la tranche inférieure de la gaine soudée à la gaine et un prolongement dans lequel sont usinées des gorges circonférentielles et **en ce que** le barreau (26) se termine par une zone tubulaire mince (31) constituant une jupe, déformée dans les gorges du bouchon (14).

5. Crayon selon l'une quelconque des revendications 1 à 4, **caractérisé en ce que** le barreau présente une couche d'oxyde de protection d'au moins 5 µm d'épaisseur initiale et une diffusion d'oxygène sur au moins 25 µm de profondeur.

6. Crayon suivant la revendication 5, **caractérisé par le fait que** la couche protectrice est obtenue par oxydation ménagée du hafnium, durant 3 à 12 heures, entre 820 et 950°C, par de l'oxygène dilué à une teneur de 1 à 50 % dans un gaz neutre, sous pression réduite ou selon un processus d'oxydation-diffusion dont la durée d'oxydation est comprise entre 0,1% et 10 % du temps total de traitement.

7. Crayon selon l'une quelconque des revendications 1 à 5, **caractérisé en ce que** la gaine (12) et les bouchons (14, 16) sont en acier inoxydable austénitique.

8. Crayon selon l'une quelconque des revendications 1 à 7, **caractérisé en ce que** la surface extérieure de la gaine du bouchon supérieur et du bouchon de liaison est nitrurée.

9. Crayon selon l'une quelconque des revendications 1 à 8, **caractérisé en ce que** la longueur du barreau (26) est comprise entre 25 et 35 % de la longueur de la colonne de pastilles de carbure de bore.

10. Grappe de commande pour réacteur nucléaire, la grappe de commande comprenant une araignée de liaison à un mécanisme de commande et des crayons absorbants qui sont reliés par leurs bouchons supérieurs à l'araignée, **caractérisée en ce que** les crayons sont des crayons selon l'une des revendications précédentes.

## Patentansprüche

1. Absorberstab (10), mit einem Hüllrohr (12) aus rostfreiem Stahl, verschlossen durch Stopfen (14, 16), ebenfalls aus rostfreiem Stahl, und mit einer Säule von Absorbertabletten (24), etwa aus Borkarbid,
**dadurch gekennzeichnet, dass** er auch einen Stabansatz (26) aus Hafnium umfasst, der durch eine rein mechanische Verbindung an dem unteren Stopfen (14) befestigt ist.

2. Absorberstab nach Anspruch 1, **dadurch gekennzeichnet, dass** die mechanische Verbindung eine geschraubte und gehemmte Verbindung ist.

3. Absorberstab nach Anspruch 1, **dadurch gekennzeichnet, dass** die mechanische Verbindung eine durch isostatisches Kaltpressen realisierte Quetschverbindung ist.

4. Absorberstab nach Anspruch 3, **dadurch gekennzeichnet, dass** der untere Stopfen (14) einen oberen Teil, der in dem Hüllrohr sitzt, einen sich auf der unteren Stirnfläche des Hüllrohrs abstützenden, mit dem Hüllrohr verschweißten Bund (30) und eine Verlängerung aufweist, in die Umfangsnuten eingearbeitet sind, und **dadurch**, dass der Stabansatz (26) mit einem rohrförmigen dünnwandigen Bereich (31) endet, der einen in die Nuten (14) des Stopfens hinein deformierten Mantel bildet.

5. Absorberstab nach einem der Ansprüche 1 bis 4, **dadurch gekennzeichnet, dass** der Stabansatz eine Oxidschutzschicht mit einer anfänglichen Dicke von wenigstens 5 µm und einer wenigstens 25 µm tiefen Sauerstoffdiffusion umfasst.

6. Absorberstab nach Anspruch 5, **dadurch gekennzeichnet, dass** man die Schutzschicht durch eine 3- bis 12-stündige Oxidation des Hafniums zwischen 820 und 950°C durch in einem neutralen Gas verdünnten Sauerstoff mit einem Gehalt von 1 bis 50 % unter reduziertem Druck erzeugt, oder durch ein Oxidations-Diffusions-Verfahren, dessen Oxidationsdauer zwischen 0,1 % und 10 % der Gesamtzeit der Behandlung enthalten ist.

7. Absorberstab nach einem der Ansprüche 1 bis 5, **dadurch gekennzeichnet, dass** das Hüllrohr (12) und die Stopfen (14, 16) aus austenitischem rostfreiem Stahl sind.

8. Absorberstab nach einem der Ansprüche 1 bis 7, **dadurch gekennzeichnet, dass** die Außenoberfläche des Hüllrohrs, des oberen Stopfens und des Verbindungsstopfens nitriert ist.

9. Absorberstab nach einem der Ansprüche 1 bis 8, **dadurch gekennzeichnet, dass** die Länge des Stabansatzes (26) zwischen 25 und 35 % der Länge der Borkarbidtablettensäule enthalten ist.

10. Steuerstabbündel für Kemreaktor, wobei das Steuerbündel eine mit einem Steuermechanismus verbundene Hebevorrichtung und Absorberstäbe umfasst, die durch ihre oberen Stopfen mit der Hebevorrichtung verbunden sind, **dadurch gekennzeichnet, dass** die Stäbe Brennstäbe nach einem der vorangehenden Ansprüche sind.

## Claims

1. Absorber rod (10) comprising a stainless steel clad (12) closed off by plugs (14, 16), also made of stainless steel, and containing a column of absorber pellets (24), such as boron carbide pellets, **characterized in that** it also includes a hafnium terminal bar (26) fastened to the lower plug (14) by a purely mechanical link.

2. Rod according to Claim 1, **characterized in that** the mechanical link is a screwed and locked link.

3. Rod according to Claim 1, **characterized in that** the mechanical link is a link crimped by cold isostatic pressing.

4. Rod according to Claim 3, **characterized in that** the lower plug (14) has an upper portion engaged in the clad and a flange (30) that bears on the lower edge of the clad and welded to the clad, and an extension in which circumferential grooves are machined, and **in that** the bar (26) terminates in a thin tubular region (31) forming a skirt, deformed into the grooves in the plug (14).

5. Rod according to any one of Claims 1 to 4, **characterized in that** the bar has a protective oxide layer with an initial thickness of at least 5 µm and a diffusion of oxygen over at least 25 µm in depth.

6. Rod according to Claim 5, **characterized in that** the protective layer is obtained by sparing oxidation of the hafnium, for a period of 3 to 12 hours, between 820 and 950°C, by dilute oxygen with a content of 1 to 50% in an inert gas, at a reduced pressure, or by using an oxidation/diffusion process, the oxidation time of which is between 0.1% and 10% of the total treatment time.

7. Rod according to any one of Claims 1 to 5, **characterized in that** the clad (12) and the plugs (14, 16) are made of austenitic stainless steel.

8. Rod according to any one of Claims 1 to 7, **characterized in that** the outer surface of the clad of the upper plug and of the connecting plug is nitrided.

9. Rod according to any one of Claims 1 to 8, **characterized in that** the length of the bar (26) is between 25 and 35% of the length of the column of boron carbide pellets.

10. Rod cluster control assembly for a nuclear reactor, the control assembly comprising a spider for linking to a control mechanism and absorber rods that are connected via their upper plugs to the spider, **characterized in that** the rods are rods according to one of the preceding claims.
